# EUROPEAN PATENT APPLICATION

(11) **EP 2 175 643 A1**
(43) Date of publication of application: **14.04.2010**
(21) Application number: 09163228.1
(22) Date of filing: 19.06.2009
(51) Int. Cl.: H04N 5/765, H04N 9/82, G11B 27/10

(54) **Personal recording apparatus and control method thereof**

(30) Priority: 08.10.2008 KR 20080098795
(71) Applicant: Samsung Electronics Co., Ltd., Suwon-si, Gyeonggi-do 442-742 (KR)
(72) Inventor: Chung, Ji-min, Suwon-si (KR)
(74) Representative: Waddington, Richard

(57) **Abstract**

A personal recording apparatus and a control method thereof are provided. The personal recording apparatus includes an audio encoder which encodes an input audio signal to output additional audio data, a multiplexing unit which multiplexes input video data and audio data and the additional audio data output from the audio encoder to output multimedia data, and a storing unit which stores the multimedia data output from the multiplexing unit. The personal recording apparatus and the control method thereof are capable of storing additional audio data in addition to a multimedia data.

## Description

### BACKGROUND OF THE INVENTION

### 1. Field of the Invention

Apparatuses and methods consistent with the present invention relate to a personal recording apparatus and a control method thereof, and more particularly, to a personal recording apparatus capable of recording an additional audio and a control method thereof.

### 2. Description of the Related Art

Recently, as digital technologies have been developed, digital broadcasting has been rapidly standardized and commercialized, and existing ground wave broadcasting and cable broadcasting have been digitalized based on a Moving Picture Experts Group (MPEG) standard.

In digital broadcasting based on the MPEG standard, a plurality of encoded broadcasting programs are multiplexed to be transported in a transport stream from a broadcasting station, and the transport stream is received by a digital broadcasting receiver such as a set top box and output to a display apparatus such as a television through demultiplexing and decoding processes.

A representative type of a personal recording apparatus is a personal video recorder for receiving a digital multimedia broadcasting signal, storing in a high capacity memory such as a hard disk, and replaying a desired program in a desired time by a user. This personal recording apparatus may be manufactured as a set top box, or coupled with a display apparatus such as a television, to perform a digital signal processing.

Also, the personal recording apparatus is an apparatus capable of taking a still picture or a motion picture of a subject, and includes for example a digital camera or a digital camcorder. This personal recording apparatus is provided with a function capable of simultaneously recording a sound around a subject in taking the motion picture of the subject.

However, since this conventional personal recording apparatus is configured just to receive, store and replay a digital broadcasting, or just to take a motion picture of a subject and record a sound therearound, further improvements may be necessary to satisfy various demands of users.

### SUMMARY OF THE INVENTION

Exemplary embodiments of the present invention provide a personal recording apparatus and a control method thereof capable of storing an additional audio data in addition to a multimedia data.

Exemplary embodiments of the present invention also provide a personal recording apparatus and a control method thereof capable of setting at least one of a fading function and a panning function to an additional audio data.

Exemplary embodiments of the present invention also provide a personal recording apparatus and a control method thereof capable of adjusting whether to output at least one of an audio data and an additional audio data or not, and adjusting the volume thereof if a multimedia data including the audio data and the additional audio data is to be output through a speaker.

According to the present invention there is provided an apparatus and method as set forth in the appended claims. Other features of the invention will be apparent from the dependent claims, and the description which follows.

According to an aspect of the present invention, there is provided a personal recording apparatus including an audio encoder which encodes an input audio signal to output an additional audio data, a multiplexing unit which multiplexes input video data and audio data and the additional audio data output from the audio encoder to output a multimedia data, and a storing unit which stores the multimedia data output from the multiplexing unit.

The audio encoder may set at least one of a fading function and a panning function to the additional audio data depending on an input of a user.

The personal recording apparatus may further include a demultiplexing unit which receives the multimedia data comprising the additional audio data from the storing unit to separate into the video data, the audio data and the additional audio data, a video decoder which decodes the video data output from the demultiplexing unit, and an audio decoder which decodes the audio data and the additional audio data output from the demultiplexing unit.

The personal recording apparatus may further include an audio signal processing unit which may adjust a speaker output with respect to at least one of the decoded audio data and additional audio data, and the volume of the speaker output.

The audio signal processing unit may mix the decoded audio data and additional audio data if the decoded audio data and additional audio data are concurrently output.

The additional audio data may include an audio description data.

The personal recording apparatus may further include an audio input unit to output the audio signal to the audio encoder, wherein the audio input unit may include at least one of an audio input terminal connected with an external device, a microphone, and a remote controller.

The personal recording apparatus may further include a tuner which converts a received broadcasting signal to a multimedia data, and a demultiplexing unit which separates the multimedia data output from the tuner into a video data and an audio data to output to the multiplexing unit.

The personal recording apparatus may further include a video decoder and an audio decoder which decode the video data and the audio data output from the demultiplexing unit, and a display unit and a speaker which output the decoded video data and audio data.

The audio encoder may synchronize the encoded additional audio data with the video data displayed in the display unit.

The personal recording apparatus may further include a camera unit which takes a picture of a subject to output a video data, a first audio input unit which receives a sound around the subject to output a first audio signal, and a second audio input unit which outputs a second audio signal depending on an input of a user, wherein the audio encoder respectively encodes the first and second audio signals to output an audio data and an additional audio data.

The personal recording apparatus may further include a demultiplexing unit which receives a multimedia data comprising the additional audio data from the storing unit to separate into the video data, the audio data and the additional audio data, a video decoder which decodes the video data output from the demultiplexing unit, and an audio decoder which decodes the audio data and the additional audio data output from the demultiplexing unit.

The first and second audio input units respectively may comprise at least one of an audio input terminal connected with an external device, a microphone, and a remote controller.

The audio encoder may comprise a first audio encoder encoding the first audio signal output from the first audio input unit to output an audio data, and a second audio encoder encoding the second audio signal output from the second audio input unit to output an additional audio data.

According to another aspect of the present invention, there is provided a control method of a personal recording apparatus, the control method including encoding an input audio signal to output an additional audio data, multiplexing input video data and audio data and the encoded additional audio data to output a multimedia data, and storing the multiplexed and output multimedia data in a storing unit.

The control method of the personal recording apparatus may further include decoding the input video data and audio data to output to a display unit and a speaker.

The control method of the personal recording apparatus may further include receiving the multimedia data comprising the additional audio data from the storing unit, and demultiplexing into the video data, the audio data and the additional audio data, and decoding the demultiplexed video data, audio data and additional audio data, and outputting to the display unit and the speaker.

The outputting the audio data and the additional audio data to the speaker may include adjusting whether to output at least one of the audio data and the additional audio data or not, and the volume of the outputting.

The outputting the audio data and the additional audio data to the speaker may include mixing the decoded audio data and additional audio data if the decoded audio data and additional audio data are concurrently output to the speaker.

The encoding the input audio signal may further include setting at least one of a fading function and a panning function to the additional audio data depending on an input of a user.

The encoding the input audio signal may further include synchronizing the encoded additional audio data with the display data displayed in the display unit.

### BRIEF DESCRIPTION OF THE DRAWINGS

The above and other aspects of the present invention will become apparent and more readily appreciated from the following description of exemplary embodiments, taken in conjunction with the accompanying drawings, in which:

FIG. 1 is a control block diagram illustrating a personal recording apparatus which processes a storing of a multimedia data with an additional audio data in a storing unit of the personal recording apparatus according to an exemplary embodiment of the present invention;

FIG. 2 is a control block diagram illustrating a personal recording apparatus which processes a decoding of the multimedia data including the additional audio data stored in a storing unit of the personal recording apparatus according to an exemplary embodiment of the present invention;

FIG. 3 is a control block diagram illustrating a personal recording apparatus including a speaker and a display unit, the personal recording apparatus processing a storing of a multimedia data with an additional audio data in a storing unit of the personal recording apparatus according to an exemplary embodiment of the present invention;

FIG. 4 is a control block diagram illustrating a personal recording apparatus including a speaker and a display, the personal recording apparatus processing decoding and outputting of the multimedia data including the additional audio data stored in a storing unit of the personal recording apparatus according to an exemplary embodiment of the present invention;

FIG. 5 is a control block diagram illustrating a personal recording apparatus which processes storing of taken video data and audio data with an additional audio data in a storing unit of the personal recording apparatus according to an exemplary embodiment of the present invention; and

FIG. 6 is a control flowchart of a personal recording apparatus according to an exemplary embodiment of the present invention.

### DETAILED DESCRIPTION OF EXEMPLARY EMBODIMENTS

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures. Repetitive description with respect to like elements of different exemplary embodiments may be omitted for the convenience of clarity.

A personal recording apparatus according to an exemplary embodiment of the present invention may be implemented as a personal video recorder (PVR) for receiving a digital media broadcasting signal, storing the received digital media broadcasting signal in a high capacity memory such as a hard disk, and replaying a wanted program in a wanted time by a user. The PVR type of personal recording apparatus may be manufactured as a set top box or coupled with a display apparatus such as a television. However, a personal recording apparatus according to exemplary embodiments of the present invention is not limited thereto, and may be representatively implemented as a digital camera, a digital camcorder, etc., and as an apparatus capable of taking a still picture or a motion picture of a subject.

Hereinafter, exemplary embodiments of the present invention will be described by referring to the accompanying figures.

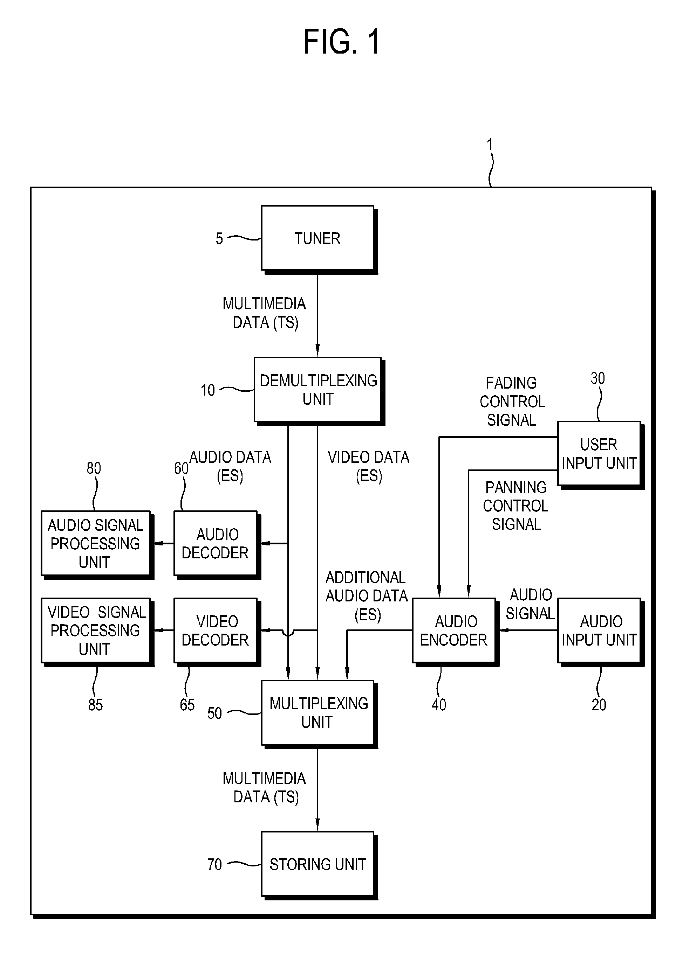

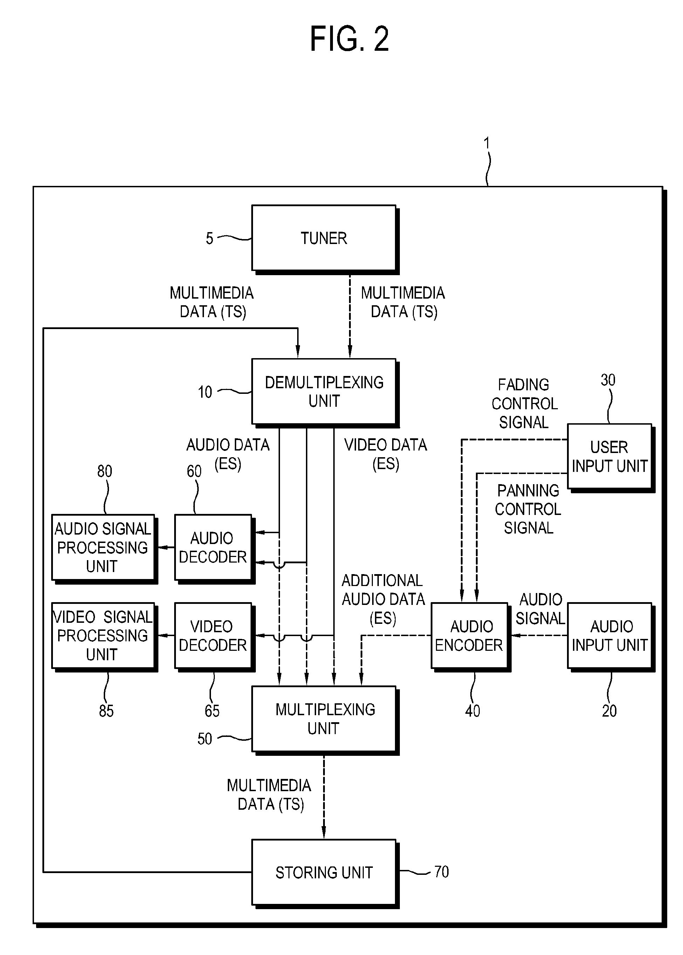

FIG. 1 is a control block diagram illustrating a personal recording apparatus which processes storing of a multimedia data input through a tuner with an additional audio data in a storing unit of the personal recording apparatus according to an exemplary embodiment of the present invention, and FIG. 2 is a control block diagram illustrating a personal recording apparatus which processes decoding of the multimedia data including additional audio data stored in a storing unit of the personal recording apparatus so that a user can view the decoded multimedia data, according to an exemplary embodiment of the present invention.

As shown in FIGs. 1 and 2, a personal recording apparatus 1 according to an exemplary embodiment of the present invention includes an audio encoder 40 that encodes an input audio signal to output an additional audio data, a multiplexing unit 50 that multiplexes input video and audio data with the additional audio data output from the audio encoder 40 to output a multimedia data, and a storing unit 70 that stores the multimedia data output from the multiplexing unit 50. The personal recording apparatus 1 according to an exemplary embodiment of the present invention may further include a demultiplexing unit 10 that outputs an input multimedia data in the form of a video data and an audio data to output to the multiplexing unit 50, and a tuner 5 that outputs a received multimedia data to the demultiplexing unit 10.

The tuner 5 tunes a channel selected from among broadcasting signals received through a sky wave, a cable, a satellite, etc., and converts a digital broadcasting signal received through the tuned channel to the multimedia data to output to the demultiplexing unit 10. According to an exemplary embodiment of the present invention, the multimedia data is of a transport stream (TS) format according to an MPEG. The personal recording apparatus according to an exemplary embodiment of the present invention may be manufactured as a set top box such as a personal video recorder (PVR). The demultiplexing unit 10 separates a multimedia data input through the tuner 5 into a video data, an audio data, etc. Also, the demultiplexing unit 10 is connected with the storing unit 70 as well as the tuner 5, and may receive a multimedia data from the storing unit 70 to separate into a video data and an audio data to output. As an exemplary embodiment of the present invention, the video data, the audio data, etc., are of an elementary stream (ES) format according to the MPEG standard. The personal recording apparatus 1 according to exemplary embodiments of the present invention is described to be mounted with the tuner 5 as shown in FIGs. 1 and 2, but is not limited thereto. However, the tuner 5 may be not mounted in exemplary embodiments. That is, the demultiplexing unit 10 may receive a multimedia data stored in the storing unit 70 if the tuner 5 is not mounted.

The personal recording apparatus 1 according to exemplary embodiments of the present invention may further include an audio decoder 60 and a video decoder 65 respectively decoding an audio data and a video data output from the demultiplexing unit 10.

Accordingly, the personal recording apparatus 1 according to exemplary embodiments of the present invention transmits and outputs the audio data and the video data decoded by the audio decoder 60 and the video decoder 65 to a display unit and a speaker. The audio decoder 60 may decode an additional audio data output from the demultiplexing unit 10 as well to respectively transport to the speaker.

However, the personal recording apparatus 1 according to exemplary embodiments of the present invention may not include separate configurations such as the audio decoder 60 and the video decoder 65, and in this case, the speak and the display unit may include configurations such as the audio decoder 60 and the video decoder 65 respectively.

The audio encoder 40 encodes an audio signal input from an external side through an audio input unit 20 to output an additional audio data. The audio input unit 20 is configured to receive an additional audio supplied by a user. That is, in an exemplary embodiment of the present invention, the audio input unit 20 may be provided as an audio input terminal to be connected with an audio device such as an external microphone. However, the audio input unit 20 is not limited thereto. Alternatively, the audio input unit 20 may be provided as an audio input terminal to be connected with other audio devices such as an MPEG audio layer-3 (MP3) device, or may be provided as a microphone or remote controller.

According to an exemplary embodiment of to the present invention, the additional audio data is of an ES format according to the MPEG standard. The additional audio data may include an audio description data. The audio description data is a data adding a description audio for describing information of a displayed screen for a blind person, and exists separately from an existing audio data. However, the additional audio data is not limited to the audio description data, and may be variously utilized for audio information which a user wants to add separately from an audio data while viewing decoded video and audio data. Also, the multimedia data, the video data, the audio data and the additional audio data are not limited to the MPEG standard, and may be applied to various standards depending on the type of an applied device and a country of application.

The audio encoder 40 may synchronize an encoded additional audio data with a video data displayed in the display unit. That is, if a user inputs an additional audio signal through the audio input unit 20 while viewing decoded video and audio data through the display unit and the speaker, the audio encoder 40 synchronizes the additional audio signal with a video data output in the display unit during a process of encoding an input audio signal to output the additional audio data. Various known synchronizing methods may be employed thereto.

The audio encoder 40 may set at least one of a fading function and a panning function to an additional audio data depending on an input of a user. The fading function is a function reducing the volume of an existing audio data to a certain degree in an area in which an additional audio data is output if a multimedia data including the additional audio data is output to the speaker. The volume of the existing audio data may be variously reduced by the fading function by 30%, 50%, etc., in comparison to the existing volume thereof, and may be variously set by a user. The user may include information about the fading function to an encoded additional audio data through a user input unit (user interface) 30. That is, according to an exemplary embodiment of the present invention, the user may transmit a fading control signal to the audio encoder 40 through the user input unit 30 such as a remote controller, etc., and the audio encoder 40 includes the information about the fading function with the additional audio data depending on the fading control signal. Accordingly, if the additional audio data including the information about the fading function is output, the volume of the existing audio data can be automatically reduced to a certain degree so that the user can easily discern and hear the additional audio data from the existing audio data.

The panning function is a function determining what speaker an additional audio data is output through if a multimedia data including the additional audio data is output through a plurality of speakers such as right and left speakers. For example, in a case of outputting a multimedia data including an additional audio data through a pair of speakers which are right and left speakers, a user may determine the additional audio data to be output through one of the left speaker and the right speaker, and may determine the additional audio data to be output through both the left speaker and the right speaker. The user may include information about the panning function to an encoded additional audio data through the user input unit 30. That is, in an exemplary embodiment of the present invention, a user may transmit a panning control signal to the audio encoder 40 through the user input unit 30 such as a remote controller, etc., and the audio encoder 40 includes the information about the panning function with the additional audio data depending on the panning control signal. Accordingly, the additional audio data including the information about the panning function can be output through a speaker depending on the panning information.

The user input unit 30 is exemplarily provided in the type of the remote controller, but is not limited thereto. Alternatively, the user input unit 30 may be provided in various types such as a button, a control lever, etc., mounted in an outer side of the personal recording apparatus 1.

The personal recording apparatus 1 according to an exemplary embodiment of the present invention may further include an audio signal processing unit 80 to adjust whether to output to a speaker at least one of the decoded audio data and additional audio data, and to adjust the volume thereof. The adjusting function for the speaker outputting the audio data and the additional audio data, and the volume thereof may be adjusted by an input of a user. That is, by an input of a user, a decoded additional audio data may be determined to be output through a speaker together with an existing audio data, or only an existing audio data may be determined to be output through a speaker without an additional audio data. Also, only an additional audio data may be determined to be output through a speaker without an existing audio data, or both an existing audio data and an additional audio data may be determined not to be output. If a decoded additional audio data is output through a speaker together with an existing audio data by an input of a user, the speaker volume adjusting function of the additional audio data may be determined to adjust only the volume of the additional audio data without varying the volume of the existing audio data. Also, if only a decoded additional audio data is output to a speaker by an input of a user, the speaker volume adjusting function of the additional audio data may be determined to adjust the volume of the additional audio data. According to an exemplary embodiment of the present invention, a user may perform the speaker output function for at least one of an audio data and an additional audio data and the volume adjusting function through the user input unit 30 such as a remote controller, etc. According to an exemplary embodiment of the present invention, the user input unit 30 for performing the speaker output function for an existing audio data and an additional audio data and the volume adjusting function thereof may be provided similar to that of the user input unit 30 for setting the fading function and the panning function, but is not limited thereto. Alternatively, they may be provided in different configurations.

The multiplexing unit 50 multiplexes video and audio data output from the demultiplexing unit 10, and an additional audio data output from the audio encoder 40 to output a multimedia data. According to an exemplary embodiment of the present invention, the multimedia data output by the multiplexing unit 50 includes an additional audio data of the ES format output from the audio encoder 40 unlike a multimedia data input through the tuner 5. However, the multiplexing unit 50 may multiplex only video and audio data output from the demultiplexing unit 10 to output a multimedia data if there is no additional audio data output from the audio encoder 40.

The storing unit 70 receives and stores a multimedia data output from the multiplexing unit 50, and transmits the stored multimedia data to the demultiplexing unit 10 by an input of a user. The storing unit 70 may be provided as a high capacity memory such as a hard disk to store a large amount of multimedia data.

The personal recording apparatus 1 according to an exemplary embodiment of the present invention may further include an audio signal processing unit 80 that converts decoded audio data and additional audio data into a signal which a speaker is capable of outputting, and a video signal processing unit 85 that converts a decoded video data into a signal which a display unit is capable of outputting. According to an exemplary embodiment of the present invention, if decoded audio data and additional audio data are concurrently output through a speaker, the audio signal processing unit 80 may include an audio mixer to mix the decoded audio data and additional audio data. However, the audio signal processing unit 80 may be provided as a separate configuration from the audio mixer.

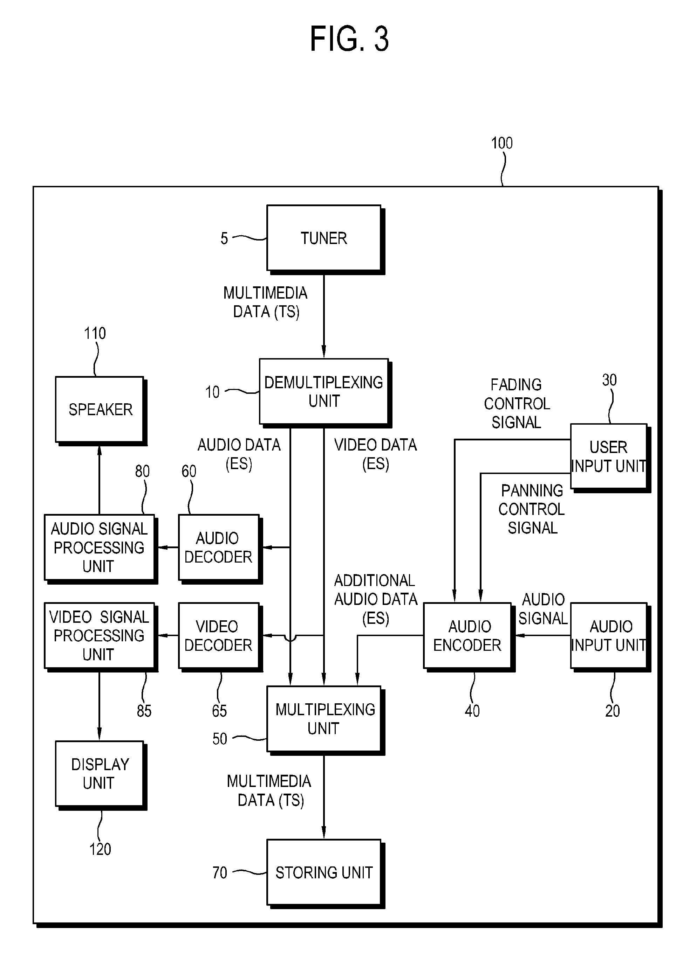

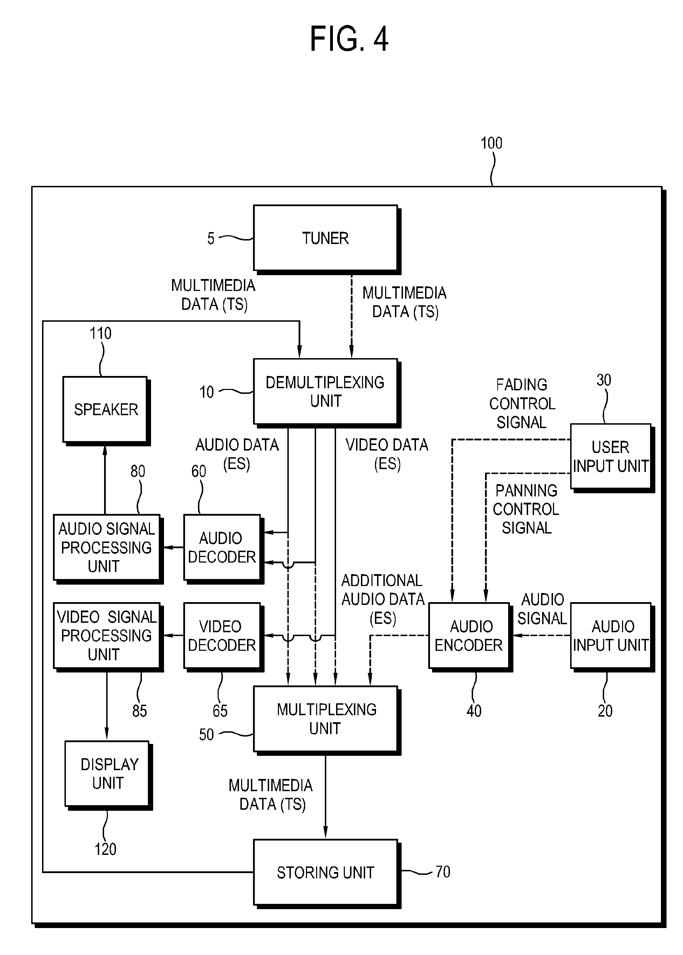

FIG. 3 is a control block diagram illustrating a personal recording apparatus which processes storing of a multimedia data input through a tuner with an additional audio data in a storing unit of the personal recording apparatus according to an exemplary embodiment of the present invention, and FIG. 4 is a control block diagram illustrating a personal recording apparatus which processes decoding and outputting of a multimedia data including additional audio data stored in a storing unit of the personal recording apparatus so that a user can view and hear according to an exemplary embodiment of the present invention. As shown in FIGs. 3 and 4, a personal recording apparatus 100 according to an exemplary embodiment of the present invention includes a speaker 110 and a display unit 120, and is different than the personal recording apparatus 1 shown in FIGs. 1 and 2. The personal recording apparatus 100 according to an exemplary embodiment may be manufactured in a display apparatus such as a television.

As shown in FIGs. 3 and 4, the personal recording apparatus 100 according to an exemplary embodiment includes a demultiplexing unit 10 that separates an input multimedia data into a video data and an audio data, an audio encoder 40 that encodes an input audio signal to output an additional audio data, a multiplexing unit 50 that multiplexes the video data and the audio data output from the demultiplexing unit 40 and the additional audio data output from the audio encoder 40 to output a multimedia data, a storing unit 70 that stores the multimedia data output from the multiplexing unit 50, an audio decoder 60 that decodes the audio data output from the demultiplexing unit 10, and a video decoder 65 that decodes the video data output from the demultiplexing unit 10, and a display unit 120 and a speaker 110 that output the decoded video data and audio data.

The personal recording apparatus 100 may further include a video signal processing unit 85, provided between the video decoder 65 and the display unit 120, that converts the decoded video data into a signal which the display unit 120 is capable of displaying, and may further include an audio signal processing unit 80 provided between the audio decoder 60 and the speaker 110, that converts the decoded audio data and additional audio data into a signal which the speaker 110 is capable of outputting. The audio signal processing unit 80 and the video signal processing unit 85 may have similar configurations as in the personal recording apparatus 1 described above.

The personal recording apparatus 100 according to an exemplary embodiment of the present invention may have substantially similar configurations as the personal recording apparatus 1 described above. For example, in the personal recording apparatus 100 according to an exemplary embodiment, setting elements or setting guiding processes with respect to the fading function and the panning function, the outputting of the speaker 110 for an audio data and an additional audio and the volume adjusting function, etc., may be output in an on-screen display (OSD) or in an audio guiding through at least one of the display unit 120 and the speaker 110.

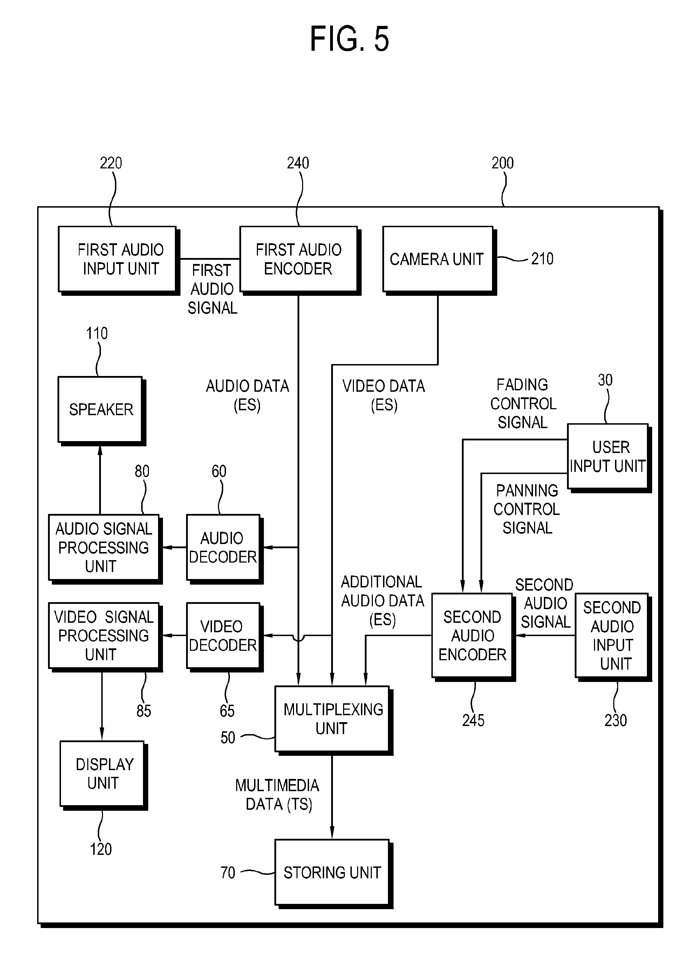

FIG. 5 is a control block diagram illustrating a personal recording apparatus which processes storing of taken video data and audio data with an additional audio data in a storing unit of the personal recording apparatus according to an exemplary embodiment of the present invention.

As shown in FIG. 5, a personal recording apparatus 200 according to an exemplary embodiment of the present invention includes a camera unit 210 that takes a picture of a subject to output a video data, a first audio input unit 220 that receives sounds around the subject to output a first audio signal, a second audio input unit 230 that outputs a second audio signal depending on an input of a user, audio encoders 240 and 245 respectively encoding the first and second audio signals output from the first audio input unit 220 and the second audio input unit 230 to output an audio data and an additional audio data, a multiplexing unit 50 that multiplexes the video data, the audio data and the additional audio data to output a multimedia data, and a storing unit 70 that stores the multimedia data output from the multiplexing unit 50.

The personal recording apparatus 200 according to an exemplary embodiment may have substantially similar configurations as the personal recording apparatus 100 described above, except for the camera unit 210, the first audio input unit 220 and the audio encoders 240 and 245. Also, the second audio input unit 230 may have a substantially similar configuration as the audio input unit 20 of the personal recording apparatus 100. Also, the personal recording apparatus 200 according to an exemplary embodiment may be implemented as a digital camcorder, and various known configurations may be applied to other driving processes except the processes of storing and replaying an additional audio data. However, the personal recording apparatus 200 according to the present invention is not limited thereto, and may be provided as various types such as a digital camera, etc., mounted with functions capable of taking a still picture or a motion picture of a subject and recording sounds around the subj ect.

As an example of the present invention, a video data output from the camera unit 210 and an audio data output from the first audio input unit 220 may be of an ES format according to an MPEG standard. Also, in an exemplary embodiment of the present invention, a multimedia data output from the multiplexing unit 50 may be of a TS format according to the MPEG standard. However, the video data and the audio data are not limited to the MPEG standard, and may employ various type standards according to the type of applied devices and country of operation.

In an exemplary embodiment of the present invention, the first audio input unit 220 includes a microphone mounted to an outer side of the personal recording apparatus 200. However, the first audio input unit 220 may include an audio input terminal connected with an external device such as a microphone, and may include a wireless microphone, or a remote controller mounted with a microphone function.

The second audio input unit 230 may have a substantially similar configuration as the audio input unit 20 of the personal recording apparatus 100.

In an exemplary embodiment of the present invention, the audio encoders 240 and 245 may include a first audio encoder 240 encoding a first audio signal output from the first audio input unit 220 to output an audio data, and a second audio encoder 245 encoding a second audio signal output from the second audio input unit 230 to output an additional audio data. However, the audio encoders 240 and 245 are not limited thereto, but may be integrally provided to respectively encode a first audio signal output from the first audio input unit 220 and a second audio signal output from the second audio input unit 230 to output an audio data and an additional audio data.

With this configurations, the personal recording apparatus 200 according to an exemplary embodiment of the present invention may make include a separate additional audio data in addition to taken video data and audio data to store in the storing unit 70 as multimedia data, and the stored multimedia data may be replayed through the speaker 110 and the display unit 120 of the personal recording apparatus 200 or on a separate external display apparatus (not shown). At least one of a fading function and a panning function may be set to an additional audio data depending on an input of a user, and an output through the speaker 110 of at least one of an audio data and an additional audio data and the volume thereof may be adjusted in the replaying process.

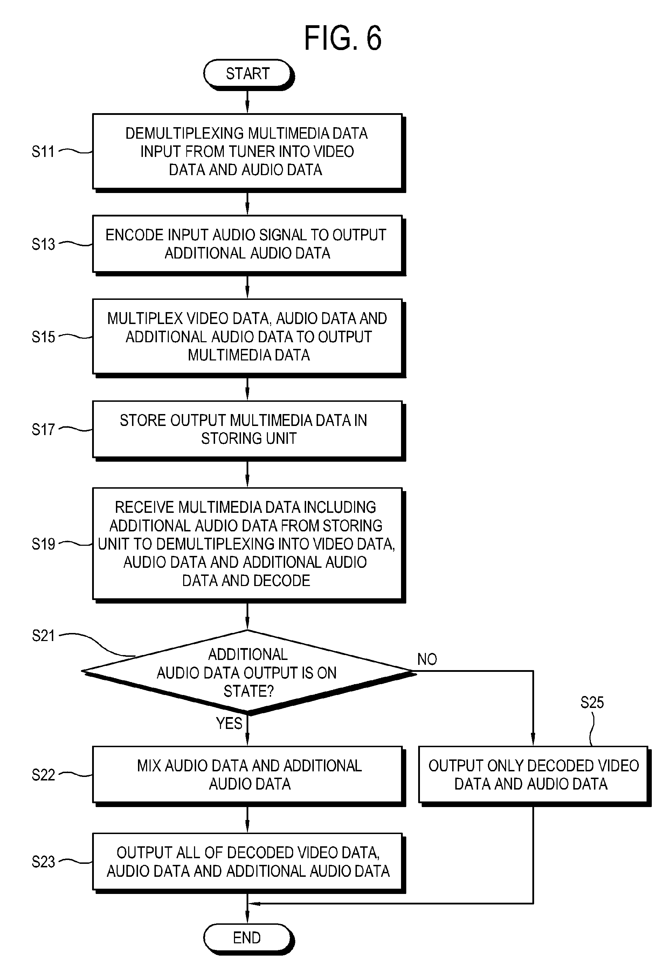

FIG. 6 is a control flowchart of a personal recording apparatus 100 according to an exemplary embodiment of the present invention taken in conjunction with FIGs. 3 and 4. A control method of the personal recording apparatus according to an exemplary embodiment will be described by referring to FIG. 6.

First, a multimedia data input from the tuner 5 is demultiplexed into a video data and an audio data (S11). However, it is not limited thereto, and a multimedia data stored in the storing unit 70 may be demultiplexed into a video data and an audio data.

An input audio signal is encoded to output an additional audio data (S 13). Here, a user may input the audio signal through the audio input unit 20. This audio signal input process may be concurrently performed while the user decodes the demultiplexed video data and audio data and views through the display unit 120 and the speaker 110. Also, the input audio signal is encoded by the audio encoder 40, and the additional audio data may be synchronized with the video data output from the display unit 120 by the audio encoder 40. Also, the audio encoder 40 may set at least one of the fading function and the panning function to the additional audio data depending on an input of a user.

The demultiplexed video and audio data and the encoded additional audio data are multiplexed to be output as a multimedia data (S 15). In this case, the additional audio data as well as the audio data is added to the output multimedia data unlike a multimedia data input from the tuner 5 described above.

The multiplexed and output multimedia data is stored in the storing unit 70 (S17). The storing unit 70, for example, may include a high capacity hard disk.

The multimedia data including the additional audio data is received from the storing unit 70, and is demultiplexed into the video data, the audio data and the additional audio data to be decoded (S19). That is, these processes may be performed if a user commands the multimedia data including the additional audio data stored in the storing unit 70 to be output to the display unit 120 and the speaker 110.

Then, the additional audio data is determined whether to be output or not (S21). In this time, if the audio data and the additional audio data are set to be output to the speaker 110 by an input of the user, the decoded audio data and additional audio data are mixed (S22). Then, the decoded video data is output to the display unit 120, and the decoded audio data and additional audio data are output to the speaker 110 together (S23). In this case, the volume of at least one of the audio data and the additional audio data output to the speaker 110 may be adjusted by an input of the user.

However, if it is set by an input of the user that only the audio data is output and the additional audio data is not output to the speaker 110, the decoded video data is displayed on the display unit 120, and only the decoded audio data is output to the speaker 110 (S25). Also, although not shown, if all of the audio data and the additional audio data are set not to be output, only the decoded video data is output to the display unit 120.

Accordingly, a display apparatus having the PVR function according to exemplary embodiments of the present invention can include an additional audio data wanted by a user with a multimedia data received from a broadcasting station or stored in a storing unit, to easily store and replay the stored multimedia data including the additional audio data.

Also, a display apparatus having the PVR function according to exemplary embodiments of the present invention can set at least one of the fading function and the panning function to an additional audio data included in a multimedia data.

Also, a display apparatus having the PVR function according to exemplary embodiments of the present invention can adjust whether to output at least one of an audio data and an additional audio data or not, and the volume thereof if outputting a multimedia data including the additional audio data.

The control method of the personal recording apparatus according to exemplary embodiments of the present invention is described with reference to the personal recording apparatus 100 shown in FIGs. 3 and 4. Control methods of the personal recording apparatus 1 shown in FIGs. 1 and 2, or the personal recording apparatus 200 shown in FIG. 5 may have substantially similar configurations as the control method of the personal recording apparatus 100 shown in FIGs. 3 and 4 in storing and replaying an additional audio data.

Although exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A personal recording apparatus comprising:
an audio encoder which encodes a first audio signal to output additional audio data;
a multiplexing unit which multiplexes video data, audio data and the additional audio data to output first multimedia data; and
a storing unit which stores the first multimedia data.

2. The personal recording apparatus according to claim 1, wherein the audio encoder sets at least one of a fading function and a panning function to the additional audio data depending on a user input.

3. The personal recording apparatus according to claim 1, further comprising:
a demultiplexing unit which receives the first multimedia data comprising the additional audio data from the storing unit and separates the first multimedia data into the video data, the audio data and the additional audio data,
a video decoder which decodes the video data output from the demultiplexing unit, and
an audio decoder which decodes the audio data and the additional audio data output from the demultiplexing unit.

4. The personal recording apparatus according to claim 3, further comprising an audio signal processing unit which adjusts a speaker output with respect to at least one of the decoded audio data and additional audio data, and the volume of the speaker output.

5. The personal recording apparatus according to claim 4, wherein the audio signal processing unit mixes the decoded audio data and additional audio data if the decoded audio data and additional audio data are concurrently output.

6. The personal recording apparatus according to claim 1, wherein the additional audio data comprises an audio description data.

7. The personal recording apparatus according to claim 1, further comprising an audio input unit which outputs the first audio signal to the audio encoder,
wherein the audio input unit comprises at least one of an audio input terminal connected with an external device, a microphone, and a remote controller.

8. The personal recording apparatus according to claim 1, further comprising:
a tuner which converts a received broadcasting signal to second multimedia data,
a demultiplexing unit which separates the second multimedia data output from the tuner into the video data and the audio data which are output to the multiplexing unit,
a video decoder and an audio decoder which decode the video data and the audio data output from the demultiplexing unit, and
a display unit and a speaker which output the decoded video data and the decoded audio data.

9. The personal recording apparatus according to claim 8, wherein the audio encoder synchronizes the encoded additional audio data with the decoded video data output by the display unit.

10. A control method of a personal recording apparatus, comprising:
encoding an input audio signal to output an additional audio data;
multiplexing video data, audio data and the encoded additional audio data to output multimedia data; and
storing the multiplexed multimedia data in a storing unit.

11. The control method of the personal recording apparatus according to claim 10, further comprising:
receiving the multimedia data comprising the additional audio data from the storing unit, and demultiplexing the received multimedia data to obtain the video data, the audio data and the additional audio data; and
decoding the demultiplexed video data, audio data and additional audio data to obtain decoded data, and outputting the decoded data to the display unit and the speaker.

12. The control method of the personal recording apparatus according to claim 11,
wherein the outputting the decoded audio data and the decoded additional audio data to the speaker comprises selectively outputting at least one of the audio data and the additional audio data or outputting neither the audio data nor the additional audio data, and adjusting the volume of the outputting.

13. The control method of the personal recording apparatus according to claim 11,
wherein the outputting the decoded audio data and the decoded additional audio data to the speaker comprises mixing the decoded audio data and the decoded additional audio data if the decoded audio data and decoded additional audio data are concurrently output to the speaker.

14. The control method of the personal recording apparatus according to claim 10,
wherein the encoding the input audio signal further comprises setting at least one of a fading function and a panning function to the additional audio data depending on an input of a user.

15. The control method of the personal recording apparatus according to claim 10, further comprising decoding the video data and the audio data, outputting the decoded video data to a display unit and outputting the decoded audio data to a speaker ,
wherein the encoding the input audio signal further comprises synchronizing the encoded additional audio data with the video data displayed by the display unit.
